# EUROPÄISCHE PATENTSCHRIFT

(11) **EP 1 991 461 B1**
(45) Veröffentlichungstag und Bekanntmachung des Hinweises auf die Patenterteilung: **23.09.2009**
(21) Anmeldenummer: 07704459.2
(22) Anmeldetag: 09.02.2007
(51) Int. Cl.: B64D 17/54, B64D 17/62, G11B 21/12

(54) **VERFAHREN UND VORRICHTUNG ZUR ERKENNUNG DES FREIEN FALLS**
METHOD AND APPARATUS FOR IDENTIFYING FREE FALL
PROCEDE ET DISPOSITIF DE DETECTION D'UNE CHUTE LIBRE

(30) Priorität: 28.02.2006 DE 102006009076
(43) Veröffentlichungstag der Anmeldung: 19.11.2008
(73) Patentinhaber: ROBERT BOSCH GMBH, 70442 Stuttgart (DE)
(72) Erfinder: LAMMEL, Gerhard, 72070 Tuebingen (DE)
(86) Internationale Anmeldenummer: PCT/EP2007/051240
(87) Internationale Veröffentlichungsnummer: WO 2007/099022

(56) Entgegenhaltungen:
- EP-A2- 0 281 159
- WO-A-02/29812
- DE-A1- 10 032 579
- DE-A1- 19 701 055
- DE-A1-102004 036 032
- GB-A- 2 032 860
- GB-A- 2 166 584

## Beschreibung

Die Erfindung geht aus von einem Verfahren und einer Vorrichtung zur Verhinderung der Beschädigung einer Vorrichtung nach den Oberbegriffen der unabhängigen Ansprüche.

### Stand der Technik

Zunehmend werden in der Unterhaltungsindustrie portable elektronische Geräte mit integrierten Festplatten angeboten. Derartige Geräte können bei der Nutzung Stößen oder Stürzen ausgesetzt sein, die während des Betriebs der Festplatte durch die damit verbundene Bewegung der Schreib-/Leseköpfe Beschädigungen auf den Speicherplatten und somit einen Datenverlust nach sich ziehen können.

Um derartige Beschädigungen zu vermeiden, kommen üblicherweise 3-achsige Beschleunigungssensoren zum Einsatz, die einen freien Fall erkennen können und somit die Möglichkeit eröffnen, den Schreib- und Lesekopf rechtzeitig in eine Parkposition zu bewegen. Ein freier Fall wird dabei erkannt, wenn an allen drei Achsen eine Beschleunigung nahe Null gemessen wird. Problematisch wird der Nachweis eines freien Falls jedoch, wenn die Festplatte sich um den Schwerpunkt des Geräts dreht und der Sensor außerhalb des Schwerpunkts angeordnet ist. Bei einer derartigen Bewegung kann der Beschleunigungssensor eine Zentrifugalbeschleunigung messen, so dass der freie Fall nicht erkannt werden kann. Um auch diese Bewegung zu erkennen, ist eine aufwendige Signalprozessierung notwendig. Darüber hinaus sind jedoch auch weitere Bewegungen denkbar, die eine Bestimmung des freien Falls in Abhängigkeit von dem Signal eines Beschleunigungssensors verhindern. So würde bei einer Drehgeschwindigkeit ω und einem Abstand r des Sensors vom Schwerpunkt der Festplatte bzw. des Geräts, in dem die Festplatte eingebaut ist, die Zentrifugalbeschleunigung a = r * ω² die Erdbeschleunigung g = 9,81 m/s² erreichen und somit einen Normalzustand simulieren. Ein derartiges Signal könnte beispielsweise dadurch erzeugt werden, dass im Abstand von 2,8 cm vom Schwerpunkt des Geräts ein Sensor vorgesehen ist, wobei das Gerät während des freien Falls sich mit 3 Umdrehungen pro Sekunde dreht. Diese Parameter stellen dabei typische Werte für den Sturz von MP3-Playern oder Handys dar.

Darüber hinaus verändert sich der Schwerpunkt einiger Geräte bei Benutzung. So sind einige mobile Geräte mit Aufklapp- oder Verschiebemechanismen ausgestattet, die es unmöglich machen, einen fest eingebauten Sensor eindeutig im Schwerpunkt anzuordnen. Gleiches gilt für Geräte, deren Schwerpunkt außerhalb des Gehäuses liegen, wie es beispielsweise bei einem aufgeklappten Laptop der Fall ist.

Aufgabe der Erfindung ist es den freien Fall eines elektronischen Geräts, vorzugsweise einer Festplatte, unabhängig von einer Drehbewegung des Geräts mittels eines Sensors zu detektieren.

### Vorteile der Erfindung

Die vorliegende Erfindung beschreibt ein Verfahren und eine Vorrichtung zur Verhinderung der Schädigung einer elektronischen Vorrichtung vor den Folgen eines freien Falls. Dabei wird zunächst ein freier Fall der elektronischen Vorrichtung erkannt und anschließend eine Maßnahme durchgeführt, die die Vorrichtung vor Schaden bewahrt. Erfindungsgemäß wird dabei der freie Fall mittels der Erfassung des Umgebungsdrucks erkannt.

Durch die Verwendung einer den Umgebungsdruck repräsentierenden Druckgröße kann unabhängig von einer Drehbewegung der Vorrichtung der freie Fall detektiert werden. Darüber hinaus reduziert sich auch der Auswerteaufwand durch die Verarbeitung lediglich einer einzelnen Messgröße im Vergleich zu den Messsignalen aus einem bekannten 3-achsigen Beschleunigungsmesser.

Eine Vorrichtung, deren freier Fall erkannt werden soll, stellen beispielsweise elektronische Geräte wie Laptops, MP3-Player, PDAs, Videokameras, Handys etc. dar. Alle diese Geräte können Festplattenspeicher enthalten, bei denen es in Folge eines Aufpralls nach einem Sturz zu einem Datenverlust aufgrund der Beschädigung der Speicherplatte durch den Schreib-/Leskopf kommen kann. Deshalb ist vorgesehen, dass bei Erkennung eines freien Falls des Geräts der Schreib-/Lesekopf der Festplatte arretiert wird, beispielsweise durch Parken des Schreib/Lesekopfes am Randbereich oder außerhalb der Speicherplatte. Somit kann ein Datenverlust durch den Aufprall verhindert werden.

Vorteilhafterweise wird der freie Fall durch eine zeitliche Änderung der Druckgröße erfasst. Diese zeitliche Änderung kann als Maß für die Beschleunigung verwendet werden, mit der die Vorrichtung bzw. die Festplatte fällt.

Um sonstige Bewegungen des elektronischen Geräts, wie sie regelmäßig bei der Benutzung von MP3-Player, Handys, etc. vorkommen, nicht mit dem freien Fall zu verwechseln, kann vorgesehen sein, die Druckgröße und/oder die zeitliche Änderung der Druckgröße mit einem vorgebbaren Schwellenwert zu vergleichen. Wird der Schwellenwert überschritten, kann somit auf einen freien Fall geschlossen werden.

In einer Weiterbildung der Erfindung ist vorgesehen, dass der Drucksensor in der Vorrichtung mittels eines mikromechanischen Membransensors realisiert wird. Dabei ist insbesondere vorgesehen, dass das Sensorelement des Membransensors in einem Halbleitersubstrat eingebracht ist und kapazitive oder piezosensitive Elemente zur Druckerfassung aufweist. Durch eine derartige Miniaturisierung kann der Drucksensor sehr platz sparend in der Vorrichtung untergebracht werden.

Zur Erkennung des freien Falls ist eine Auswerteschaltung vorgesehen, die das Messsignal des Drucksensors erfasst und entsprechend aufbereitet. Dabei kann vorgesehen sein, dass die Auswerteschaltung direkt in den Drucksensor integriert ist. Bei der Verwendung eines mikromechanischen Drucksensors kann darüber hinaus auch vorgesehen sein, dass die Auswerteschaltung ebenfalls mittels Halbleiter-Prozessen direkt auf das Sensorelement bzw. neben das Sensorelement auf das Halbleitersubstrat aufgebracht wird. Alternativ kann jedoch auch vorgesehen sein, die Auswerteschaltung auf einen separaten Halbleiterchip aufzubringen und dem Drucksensor zuzuordnen.

Um eine in der Vorrichtung befindliche Batterie zu schonen, kann auch vorgesehen sein, den Drucksensor nur getaktet anzusteuern, so dass diskrete Drucksignale erzeugt werden.

Weitere Vorteile ergeben sich aus der nachfolgenden Beschreibung von Ausführungsbeispielen bzw. aus den abhängigen Patentansprüchen.

### Zeichnungen

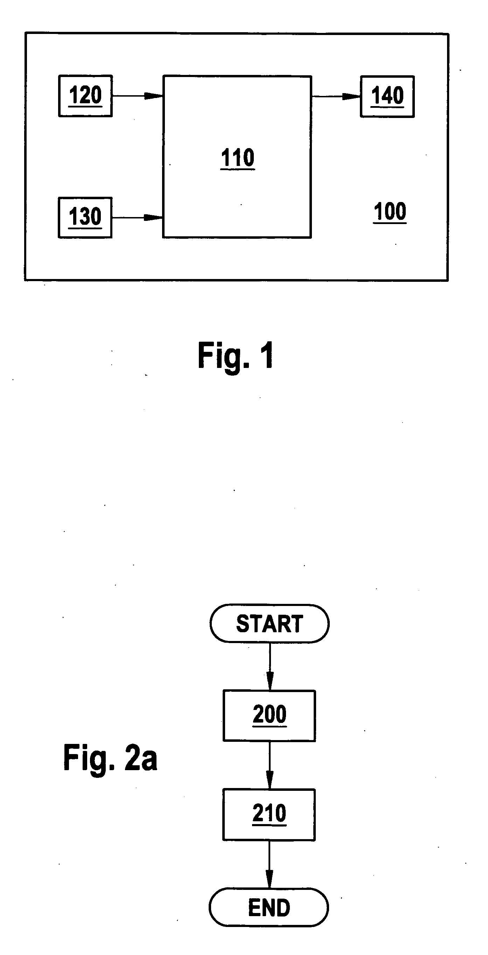

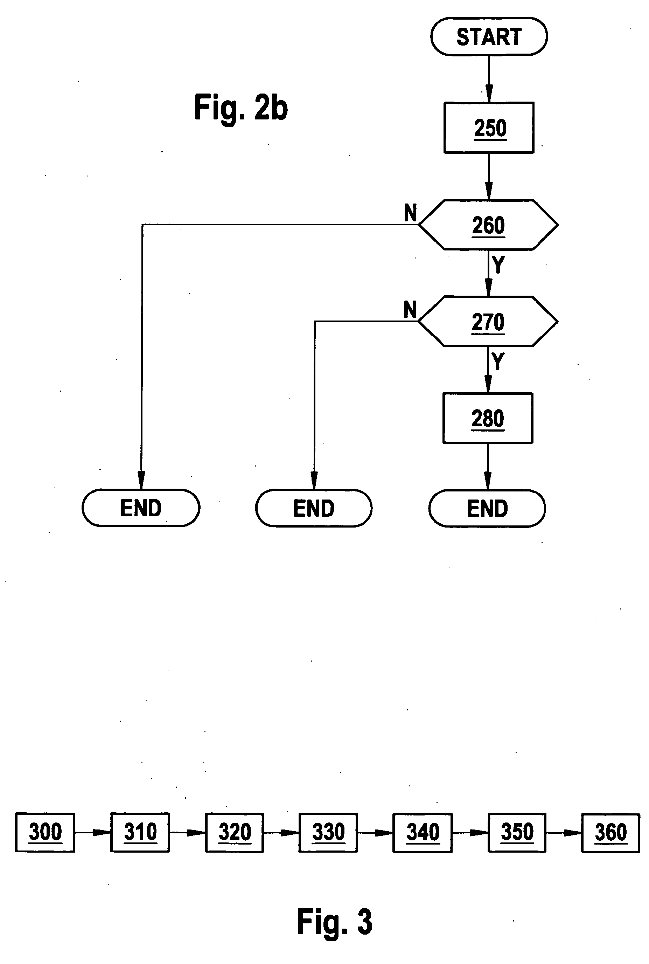

Figur 1 zeigt schematisch eine erfindungsgemäße elektronische Vorrichtung. In Figur 2 ist ein Flussdiagramm zur Erkennung eines freien Falls in Abhängigkeit von der Erfassung einer Druckgröße dargestellt. Eine mögliche Auswerteschaltung wird in Figur 3 gezeigt.

### Ausführungsbeispiel

Da sich bei einer vertikalen Bewegung der Atmosphärendruck ändert, kann durch eine entsprechende Erfassung des Umgebungsdrucks auf eine Fallbewegung geschlossen werden. Aus der zeitlichen Veränderung Δp des vom Drucksensor erfassten Luftdrucks p, lässt sich die Veränderung der Höhe Δh = Δp / (g*p) bestimmen, wobei p die Dichte der Luft darstellt (ca. ρ = 1,27 kg/m³ auf Meereshöhe). Wird nun gleichzeitig die Zeit t bestimmt, in der der Körper im Schwerefeld g fällt, so kann aus der Veränderung des Luftdrucks auf einen freien Fall des Körpers geschlossen werden.

In der Figur 1 wird die Vorrichtung, in der der freie Fall erkannt wird, als Block 100 dargestellt. Dabei kann es sich beispielsweise um einen Laptop, einen M P3-Player, einen PDA, ein Handy oder ein sonstiges elektronisches Gerät handeln, welches durch den Aufprall nach einem Sturz Schäden aufweisen kann. Besonders Festplatten in den genannten Geräten sind bei einem Sturz von einer Schädigung bedroht, da der Schreib-/Leskopf durch den Aufprall die Speicherplatten berühren und ggf. sogar irreparabel beschädigen kann. Eine derartige Schädigung kann einen Datenverlust oder eine Beeinträchtigung der Festplatte bzw. des Geräts zur Folge haben. Um eine Schädigung zu verhindern, ist deshalb vorgesehen, die Messsignale eines Drucksensors 120 in eine Steuereinheit 110 einzulesen, um einen freien Fall und somit einen drohenden Aufprall zu erkennen. Erkennt die Steuereinheit 110 den freien Fall, leitet sie eine Maßnahme ein, die den Schreib-/Lesekopf der Festplatte 140 arretiert, beispielsweise indem sie ihn an den Rand des Plattenspeichers fährt und dort arretiert.

Alternativ kann auch vorgesehen sein, dass das Signal des Drucksensors in eine separate Auswerteschaltung 130 zur Erkennung des freien Falls eingelesen wird. Durch eine derartige Auswerteschaltung 130 kann erreicht werden, dass die Steuereinheit 110 lediglich dann informiert wird, wenn ein freier Fall detektiert wird. Somit reduziert sich der Rechenaufwand innerhalb der Steuereinheit.

Um kleine Fallhöhen sicher zu detektieren, ist eine äußerst genaue Erfassung des Drucks notwendig. Spezielle mikromechanische Membransensoren aus Halbleitermaterialien, wie sie beispielsweise in der DE 100 32 579 A1, der DE 10 2004 036035 A1 oder der DE 197 01 055 A1 beschrieben werden, erlauben eine derartig detaillierte Erfassung. Dabei kann als Sensorelement für den mikromechanischen Drucksensor sowohl eine kapazitive als auch eine piezosensitive Erfassung des Drucks verwendet werden. Als Ausgabe ist dabei ein elektrisches Signal vorgesehen, welches proportional zum erfassten Druck ist.

In den Figuren 2a und 2b werden Algorithmen beschrieben, die die Erfassung des Drucksignals und die Erkennung eines freien Falls der Vorrichtung 100 darstellen. Entsprechende Programme können beispielsweise in der Steuereinheit 110 ablaufen. Nach dem Start erfasst der erste Programmteil, wie in Figur 2a dargestellt, im Schritt 200 das Drucksignal des Drucksensors 120. Das Drucksignal repräsentiert den Umgebungsdruck der Vorrichtung 100, d.h. den Atmosphärendruck. Im Schritt 210 wird das Drucksignal zweimal differenziert, d.h. mittels einer zweifachen zeitlichen Ableitung in die Änderungsgeschwindigkeit des Drucks d²p/dt² umgewandelt. Diese Größe kann bei einer entsprechend genauen Erfassung des Drucksignals als Maß für die vertikale Beschleunigung der Vorrichtung 100 verwendet werden. Dazu wird in einem zweiten Programmteil, wie er in Figur 2b dargestellt wird, die Änderungsgeschwindigkeit des Drucks d²p/dt² erfasst und im Schritt 260 mit unteren und oberen Schwellenwert SW_{U} und SW_{O} verglichen. Liegt d²p/dt² außerhalb der Bandbreite, die durch die beiden Schwellenwerte SW_{U} und SW_{O} vorgegeben wird, wird kein freier Fall erkannt und das Programm beendet. Durch eine geeignete Wahl der Schwellenwert SW_{U} und SW_{O} lassen sich normale vertikale Bewegungen, die bei der Benutzung der Vorrichtung typischerweise auftreten könne, von einem freien Fall unterscheiden. Liegt d²p/dt² jedoch zwischen den beiden Grenzen SW_{U} und SW_{O}, so deutet das auf einen freien Fall hin. Im nachfolgenden Schritt 270 wird dann überprüft, ob der Zustand eine gegebene Zeitdauer tₘᵢₙ andauert, bevor in Schritt 280 die Information abgegeben wird, dass ein freier Fall vorliegt. Verlässt der Wert d²p/dt² jedoch den Bereich SW_{U} < d²p/dt² < SW_{O} innerhalb einer Zeit t < tₘᵢₙ, so wird das Programm beendet. Die Zeit tₘᵢₙ ist dabei so zu wählen, dass einerseits eindeutig ein zufälliges Vorliegen der Bedingung SW_{U} < d²p/dt² < SW_{O} ausgeschlossen werden kann, andererseits jedoch die zurückgelegte Fallhöhe noch gering ist, um entsprechende Maßnahmen zur Sicherung der Vorrichtung vor Beschädigung durchführen zu können.

Das Programm wird von der Steuereinheit in regelmäßigen Zeitabständen aufgerufen, beispielsweise mehrmals pro Sekunde, um auf freien Fall zu prüfen.

Wie bereits erwähnt, kann die Erkennung des freien Falls in einer separaten Auswerteschaltung durchgeführt werden. Eine derartige Auswerteschaltung soll beispielhaft anhand eines weiteren Ausführungsbeispiels in Figur 3 beschrieben werden. Ausgehend von einem Drucksensor 300 werden die erfassten Drucksignale p in einem Zwischenspeicher 310 (beispielsweise ein sample & hold-Glied) erfasst. Das so erhaltene Signal wird elektrisch verstärkt, vorzugsweise mit einem rauscharmen Vorverstärker 320. In diesem Vorverstärker kann zusätzlich noch ein Abgleich der Empfindlichkeit sowie eine Glättung des Signals vorgenommen werden, bevor im Block 330 eine zeitliche Ableitung des aufbereiteten Drucksignals erfolgt. Wie bereits zu Figur 2a beschrieben, erfolgt vorzugsweise eine zweifache zeitliche Ableitung des Drucksignals, um die Änderung der Druckveränderung abzubilden (entspricht der Beschleunigung). Nimmt die Druckveränderung zu, so kann von einer beschleunigten Bewegung der Vorrichtung ausgegangen werden, wie sie typisch für einen freien Fall ist. Da jedoch nicht ausgeschlossen werden kann, dass die Ursache für die beschleunigte Bewegung durch eine normale Benutzung der Vorrichtung ausgelöst wird, beispielsweise bei der Auf- und Abbewegung eines Handys beim Joggen, wird in Block 340 ein Komparator verwendet. Wird eine beschleunigte Bewegung zwischen dem unteren und dem oberen Schwellenwert des Komparators erfasst, wird im Block 350 überprüft, ob diese beschleunigte Bewegung wenigstens eine Zeit tₘᵢₙ andauert. Erst dann kann in Block 360 festgestellt werden, dass es sich um einen freien Fall handelt.

Der Drucksensor kann in das Gehäuse oder ein Bauteil der Vorrichtung, beispielsweise des Handys integriert sein. Im einfachsten Fall benötigt der Drucksensor lediglich eine Stromversorgung und enthält einen digitalen Ausgang zur Signalauswertung. Um bei batteriebetriebenen Geräten Strom zu sparen, kann die Versorgung des Sensorelements getaktet werden, wobei das Signal zur Auswertung wie beschrieben in einem Halteglied (sample & hold) gespeichert wird. Alternativ kann das Signal jedoch auch rein digital mit Hilfe eines AD-Wandlers ausgewertet werden.

## Patentansprüche

1. Verfahren zur Verhinderung der Schädigung einer elektronischen Vorrichtung (100), wobei
- ein freier Fall einer Vorrichtung (100) erkannt und
- bei einer Erkennung des freien Falls eine Maßnahme durchgeführt wird, die Vorrichtung vor Schädigung zu bewahren,
**dadurch gekennzeichnet, dass**
der freie Fall in Abhängigkeit von einer den Umgebungsdruck repräsentierenden Druckgröße (120) erkannt wird.

2. Verfahren nach Anspruch 1, **dadurch gekennzeichnet, dass** die Vorrichtung eine Festplatte aufweist und die Maßnahme darin besteht, den Schreib-/Lesekopf zu arretieren.

3. Verfahren nach Anspruch 1, **dadurch gekennzeichnet, dass** der freie Fall der Vorrichtung in Abhängigkeit von der zeitlichen Änderung der Druckgröße erfasst wird.

4. Verfahren nach einem der vorhergehenden Ansprüche, **dadurch gekennzeichnet, dass** die Druckgröße und/oder die zeitliche Änderung der Druckgröße mit einem vorgebbaren Schwellenwert verglichen wird und der freie Fall der Vorrichtung erkannt wird, wenn der Schwellenwert überschritten wird.

5. Elektronische Vorrichtung mit einem Mittel (110, 130) zur Erkennung eines freien Falls der elektronischen Vorrichtung, wobei die Vorrichtung (100) bei Erkennung des freien Falls eine Maßnahme durchführt, die eine Beschädigung der Vorrichtung verhindert,
**dadurch gekennzeichnet, dass**
die Vorrichtung einen Drucksensor (120) zur Erfassung einer den Umgebungsdrucks repräsentierenden Druckgröße aufweist, wobei vorgesehen ist, dass der freie Fall in Abhängigkeit der erfassten Druckgröße erkannt wird.

6. Vorrichtung nach Anspruch 5, **dadurch gekennzeichnet, dass** die Vorrichtung eine Festplatte (140) aufweist, wobei bei Erkennung des freien Falls der Schreib-/Lesekopf der Festplatte geparkt und / oder arretiert wird.

7. Vorrichtung nach Anspruch 5 oder 6, **dadurch gekennzeichnet, dass** das Mittel den freien Fall in Abhängigkeit von der zeitlichen Änderung der Druckgröße erfasst.

8. Vorrichtung nach einem der Ansprüche 5 bis 7, **dadurch gekennzeichnet, dass** das Mittel die Druckgröße und/oder die zeitliche Änderung der Druckgröße mit einem vorgebbaren Schwellenwert vergleicht und den freien Fall erkennt, wenn der Schwellenwert überschritten wird.

9. Vorrichtung nach einem der Ansprüche 5 bis 8, **dadurch gekennzeichnet, dass** der Drucksensor einen mikromechanischen Membransensor aus einem Halbleitersubstrat aufweist, wobei insbesondere vorgesehen ist, dass der Drucksensor kapazitive oder piezosensitive Sensorelemente aufweist.

10. Vorrichtung nach einem der Ansprüche 5 bis 9, **dadurch gekennzeichnet, dass** zur Erkennung des freien Falls der Vorrichtung eine Auswerteschaltung (130) vorgesehen ist, die in den Drucksensor integriert ist, wobei insbesondere vorgesehen ist, dass die Auswerteschaltung in das Sensorelement des Drucksensors integriert ist.

11. Vorrichtung nach einem der Ansprüche 5 bis 10, **dadurch gekennzeichnet, dass** der Drucksensor
- zur Erfassung der Druckgröße getaktet angesteuert wird und/oder
- digitale Druckgrößen erzeugt.

## Claims

1. Method for preventing damage to an electronic apparatus (100),
- free fall of an apparatus (100) being identified and
- a measure for safeguarding the apparatus from damage being carried out if free fall is identified,
**characterized in that**
free fall is identified on the basis of a pressure variable (120) which represents the ambient pressure.

2. Method according to Claim 1, **characterized in that** the apparatus has a hard disk and the measure involves locking the read/write head.

3. Method according to Claim 1, **characterized in that** free fall of the apparatus is detected on the basis of the temporal change in the pressure variable.

4. Method according to one of the preceding claims, **characterized in that** the pressure variable and/or the temporal change in the pressure variable is/are compared with a predefinable threshold value and free fall of the apparatus is identified if the threshold value is exceeded.

5. Electronic apparatus having a means (110, 130) for identifying free fall of the electronic apparatus, the apparatus (100) carrying out a measure which prevents damage to the apparatus if free fall is identified,
**characterized in that**
the apparatus has a pressure sensor (120) for detecting a pressure variable which represents the ambient pressure, free fall being identified on the basis of the pressure variable detected.

6. Apparatus according to Claim 5, **characterized in that** the apparatus has a hard disk (140), the read/write head of the hard disk being parked and/or locked if free fall is identified.

7. Apparatus according to Claim 5 or 6, **characterized in that** the means detects free fall on the basis of the temporal change in the pressure variable.

8. Apparatus according to one of Claims 5 to 7, **characterized in that** the means compares the pressure variable and/or the temporal change in the pressure variable with a predefinable threshold value and identifies free fall if the threshold value is exceeded.

9. Apparatus according to one of Claims 5 to 8, **characterized in that** the pressure sensor has a micromechanical membrane sensor made of a semiconductor substrate, the pressure sensor having capacitive or piezosensitive sensor elements, in particular.

10. Apparatus according to one of Claims 5 to 9, **characterized in that**, in order to identify free fall of the apparatus, provision is made of an evaluation circuit (130) which is integrated in the pressure sensor, the evaluation circuit being integrated in the sensor element of the pressure sensor, in particular.

11. Apparatus according to one of Claims 5 to 10, **characterized in that** the pressure sensor
- is driven in clocked fashion in order to detect the pressure variable and/or
- generates digital pressure variables.

## Revendications

1. Procédé pour empêcher les dommages à un dispositif électronique (100), dans lequel
- la chute libre du dispositif (100) est détectée et
- au cas où la chute libre est détectée, une mesure est exécutée pour protéger le dispositif des dommages,
**caractérisé en ce que**
la chute libre est détectée sur base d'une valeur de pression (120) qui représente la pression ambiante.

2. Procédé selon la revendication 1, **caractérisé en ce que** le dispositif présente un disque dur et **en ce que** la disposition consiste à bloquer la tête d'écriture-lecture.

3. Procédé selon la revendication 1, **caractérisé en ce que** la chute libre du dispositif est détectée sur base d'une modification temporelle de la valeur de la pression.

4. Procédé selon l'une des revendications précédentes, **caractérisé en ce que** la valeur de la pression et/ou la modification temporelle de la valeur de la pression sont comparées à des valeurs de seuil prédéterminables et **en ce qu'**une chute libre du dispositif est détectée si les valeurs de seuil sont dépassées.

5. Dispositif électronique doté d'un moyen (110, 130) de détection d'une chute libre du dispositif électronique, le dispositif (100) exécutant lorsqu'une chute libre est détectée une disposition qui empêche que le dispositif soit endommagé,
**caractérisé en ce que**
le dispositif présente une sonde de pression (120) qui détecte une valeur de pression qui représente la pression ambiante, la chute libre étant détectée sur base de la valeur de pression détectée.

6. Dispositif selon la revendication 5, **caractérisé en ce que** le dispositif présente un disque dur (140) et **en ce que** lorsqu'une chute libre est détectée, la tête d'écriture-lecture du disque dur est parquée et/ou bloquée.

7. Dispositif selon les revendications 5 ou 6, **caractérisé en ce que** le moyen détecte une chute libre sur base d'une modification temporelle de la valeur de la pression.

8. Dispositif selon l'une des revendications 5 à 7, **caractérisé en ce que** le moyen compare la valeur de la pression et/ou la modification temporelle de la valeur de la pression à des valeurs de seuil prédéterminables et détecte une chute libre si les valeurs de seuil sont dépassées.

9. Dispositif selon l'une des revendications 5 à 8, **caractérisé en ce que** le détecteur de pression présente un détecteur micromécanique à membrane réalisé dans un substrat semi-conducteur et **en ce que** le détecteur de pression présente en particulier des éléments de détection capacitifs ou piézo-sensibles.

10. Dispositif selon l'une des revendications 5 à 9, **caractérisé en ce que** pour détecter une chute libre du dispositif, il présente un circuit d'évaluation (130) intégré dans le détecteur de pression et **en ce que** le circuit d'évaluation est en particulier intégré dans l'élément de détection du détecteur de pression.

11. Dispositif selon l'une des revendications 5 à 10, **caractérisé en ce que** pour détecter la valeur de la pression, le détecteur de pression est commandé de manière cadencée et/ou forme des valeurs numériques de la pression.
